# EUROPEAN PATENT SPECIFICATION

(11) **EP 2 939 494 B1**
(45) Date of publication and mention of the grant of the patent: **27.05.2020**
(21) Application number: 13867265.4
(22) Date of filing: 29.11.2013
(51) Int. Cl.: H04W 8/00

(54) **COMMUNICATION APPARATUS, CONTROL METHOD, AND COMPUTER-READABLE STORAGE MEDIUM**
KOMMUNIKATIONSVORRICHTUNG, STEUERUNGSVERFAHREN UND COMPUTERLESBARES SPEICHERMEDIUM
APPAREIL DE COMMUNICATION, PROCÉDÉ DE COMMANDE, ET SUPPORT DE STOCKAGE LISIBLE PAR ORDINATEUR

(30) Priority: 27.12.2012 JP 2012286175
(43) Date of publication of application: 04.11.2015
(73) Proprietor: Canon Kabushiki Kaisha, Tokyo 146-8501 (JP)
(72) Inventor: GOTO, Fumihide, Tokyo 146-8501 (JP)
(74) Representative: Uffindell, Christine Helen
(86) International application number: PCT/JP2013/082749
(87) International publication number: WO 2014/103656

(56) References cited:
- EP-A1- 2 389 042
- WO-A1-2010/131424
- JP-A- 2005 277 937
- JP-A- 2010 056 955
- JP-A- 2010 268 300
- JP-A- 2012 129 886
- US-A1- 2011 149 816

## Description

### TECHNICAL FIELD

The present invention relates to a technique of establishing a wireless connection using one of a base station function and a terminal function.

### BACKGROUND ART

In recent years, the number of cases in which an electronic device such as a digital camera or printer is used as a communication apparatus by incorporating a wireless LAN terminal (station) function and connecting it to a wireless LAN is increasing. For example, Japanese Patent Laid-Open No. 2011-35768 describes a method of facilitating sharing images by incorporating a wireless LAN function in a digital camera.

Furthermore, a wireless LAN base station (access point) function is often incorporated to directly connect between electronic devices. If an electronic device incorporates the wireless LAN access point function, it also often incorporates a DHCP server function to facilitate assignment of an IP address.

The Wi-Fi Alliance stipulates a standard called Wi-Fi Direct®. Wi-Fi Direct defines a protocol for deciding whether each electronic device operates as a wireless LAN access point or wireless LAN station. For example, it is possible to automatically decide which of two electronic devices serves as a wireless LAN access point and a wireless LAN station by executing the protocol, thereby improving the user convenience.

Wi-Fi Direct also defines a function (service discovery function) of advertising/searching for a service supported by an upper application as an optional function. According to the service discovery function, it is possible to obtain service information held by an electronic device as a connection partner before executing connection processing, thereby improving the user convenience.

It is, however, necessary with the service discovery function to identify a partner apparatus, and send a supported service query to the partner apparatus. Depending on the wireless LAN connection state of the partner apparatus or the self communication apparatus, that is, depending on whether the apparatus operates as a base station or terminal, processing of temporarily disconnecting an already established wireless LAN and re-connecting the wireless LAN or the like is required. As a result, the number of operations which should be performed by the user increases.

US 2011/0149816 discloses a wireless communication device with a group owner and client function. When a destination can act as only one of group owner or client, the wireless communication device acts as the other function.

EP2389042 describes a device joining a network and the GO device of the network determining whether or not the network topology should be changed in order to accommodate the new device. The new wireless communication device enters the communication group tentatively as a client. If a new topology is required, the new GO device is notified to the wireless devices and the network is reformed.

The present invention has been made in consideration of the aforementioned problem, and provides a technique of decreasing the number of operations which should be performed by the user, and allowing a communication apparatus to autonomously execute wireless connection control.

### SUMMARY OF INVENTION

According to one aspect of the present invention, there is provided a communication apparatus according to claim 1.

According to another aspect of the present invention, there is provided a control method according to claim 5. According to a further aspect of the present invention there is provided a computer-readable storage medium according to claim 9.

Further features of the present invention will become apparent from the following description of exemplary embodiments with reference to the attached drawings.

### BRIEF DESCRIPTION OF DRAWINGS

Fig. 1 is a block diagram showing an example of the arrangement of a communication apparatus;
Fig. 2 is a block diagram showing an example of the functional arrangement associated with the communication control function of the communication apparatus;
Fig. 3 is a view showing an example of the configuration of a wireless communication system;
Fig. 4 is a sequence chart showing connection establishment processing in case 1 according to the first embodiment;
Fig. 5 is a flowchart illustrating connection processing in case 1 according to the first embodiment;
Fig. 6 is a sequence chart showing connection establishment processing in case 2 according to the first embodiment;
Fig. 7 is a flowchart illustrating connection processing in case 2 according to the first embodiment;
Fig. 8 is a sequence chart showing connection establishment processing in case 3 according to the first embodiment;
Fig. 9 is a flowchart illustrating connection processing in case 3 according to the first embodiment;
Fig. 10 is a flowchart illustrating connection processing executed by the communication apparatus according to the first embodiment;
Fig. 11 is a view showing another example of the configuration of the wireless communication system;
Fig. 12 is a flowchart illustrating connection processing executed by a communication apparatus according the second embodiment; and
Fig. 13 is a flowchart illustrating connection processing executed by a communication apparatus according to the third embodiment.

### DESCRIPTION OF EMBODIMENTS

An exemplary embodiment(s) of the present invention will now be described in detail with reference to the drawings. It should be noted that the relative arrangement of the components, the numerical expressions and numerical values set forth in these embodiments do not limit the scope of the present invention unless it is specifically stated otherwise.

Although a case in which a wireless LAN system compliant with the IEEE802.11 standard series is used will be described below, a communication method is not limited to a wireless LAN compliant with the IEEE802.11 standard.

### <<First Embodiment>>

### (Arrangement of Wireless Communication Apparatus)

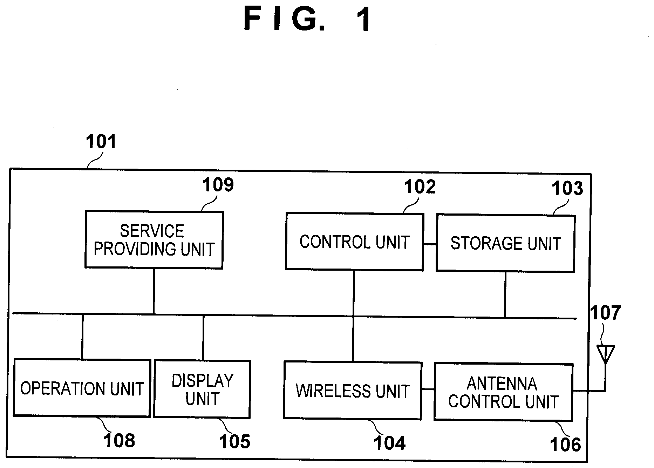

Fig. 1 is a block diagram showing an example of the arrangement of each wireless communication apparatus (to be described later). A wireless communication apparatus 101 includes, for example, a control unit 102, a storage unit 103, a wireless unit 104, a display unit 105, an antenna control unit 106, an antenna 107, an operation unit 108, and a service providing unit 109. The control unit 102 controls the overall apparatus by executing a control program stored in the storage unit 103. The control unit 102 also controls setting of communication parameters with another apparatus. The storage unit 103 stores control programs executed by the control unit 102, and various kinds of information such as communication parameters. Various operations (to be described later) are performed when, for example, the control unit 102 executes the control programs stored in the storage unit 103.

The wireless unit 104 is a function unit for executing wireless LAN communication compliant with the IEEE802.11 standard series. The display unit 105 is a function unit for performing various display operations, and has a function capable of outputting visually recognizable information like an LCD or LED or a function of outputting a sound like a loudspeaker. The display unit 105 includes a function of outputting at least one of visual information and audio information.

The antenna control unit 106 controls the antenna 107 to transmit/receive a radio wave in accordance with an instruction from the wireless unit 104. The operation unit 108 has a function of accepting various inputs from the user, and is a function unit for operating the communication apparatus by transferring an accepted operation to, for example, the control unit 102. The operation unit 108 detects a user operation, and identifies, for example, a service including communication to be executed. The service providing unit 109 includes a function of providing service information of an application level provided by the communication apparatus. If, for example, the communication apparatus is a printer, it provides a printing function. Alternatively, if the communication apparatus is a digital camera, it provides an image capturing function.

### (Functional Arrangement of Wireless Communication Apparatus)

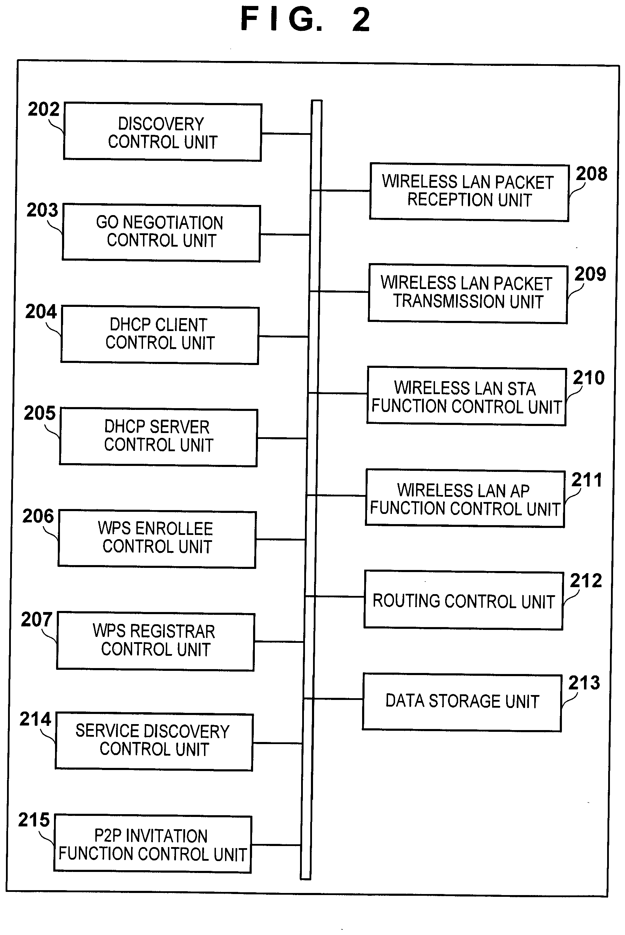

Fig. 2 is a block diagram showing an example of the software functional block arrangement of the wireless communication apparatus 101 for executing a communication control function (to be described later). Reference numeral 201 denotes an overall software functional block.

Reference numeral 202 denotes a discovery control unit, which operates search processing of searching for a communication apparatus as a communication partner; and 203, a GO Negotiation control unit, which performs control based on the Wi-Fi Direct protocol specification, and decides, for example, which of two communication apparatuses serves as a wireless LAN access point (AP) and a wireless LAN station (STA). In Wi-Fi Direct, a communication apparatus which executes the wireless LAN AP function (base station function) is called a P2P group owner (to be referred to as a GO hereinafter), and a communication apparatus which executes the wireless LAN STA function (terminal function) is called a P2P client (to be referred to as a CL hereinafter). If the communication apparatus serves as a GO or AP, a wireless LAN access point (AP) function control unit 211 (to be described later) is activated. If the communication apparatus serves as a CL or wireless LAN station, a wireless LAN station (STA) function control unit 210 (to be described later) is activated. GO Negotiation is a predetermined protocol defined in the Wi-Fi Direct specification but is not the feature of the present invention and a description thereof will be omitted. In Wi-Fi Direct, a network formed by a GO is called a P2P group. In the following description, a network may be referred to as a P2P group, and these terms will be used as synonyms.

Note that in the following description, a P2P group owner (GO), a P2P client (CL), and a communication apparatus whose role (GO or CL) is undecided will be collectively called P2P devices.

Reference numeral 204 denotes a DHCP client control unit which is activated when the GO Negotiation control unit 203 decides the role of the self communication apparatus as a STA; and 205, a DHCP server control unit which is activated when the GO Negotiation control unit 203 decides the role of the self communication apparatus as an AP.

Reference numeral 206 denotes a WPS enrollee control unit, which receives communication parameters from another WPS registrar apparatus. Similarly to the DHCP client control unit 204, the WPS enrollee control unit 206 operates when the role of the self communication apparatus is a wireless LAN station. Reference numeral 207 denotes a WPS registrar control unit, which provides communication parameters to another WPS enrollee apparatus. Similarly to the DHCP server control unit 205, the WPS registrar control unit 207 operates when the role of the self communication apparatus is a wireless LAN access point.

Reference numeral 208 denotes a wireless LAN packet reception unit; and 209, a wireless LAN packet transmission unit. The units 208 and 209 control reception and transmission of all packets including a communication protocol of an upper layer, respectively. The wireless LAN STA function control unit 210 executes, for example, authentication/encryption processing when the self communication apparatus operates as a wireless LAN STA. The wireless LAN AP function control unit 211 executes, for example, authentication/encryption processing and management of a communication partner apparatus when the self communication apparatus operates as a wireless LAN AP. One or both of the wireless LAN STA function control unit 210 and the wireless LAN AP function control unit 211 can operate.

Reference numeral 212 denotes a routing control unit, which bridges and routes a communication packet while the wireless LAN AP function control unit 211 is operating; and 213, a data storage unit, which stores and holds software itself, wireless LAN parameters, and various tables such as the above-described DHCP address table and ARP table.

Reference numeral 214 denotes a service discovery control unit, which controls a service discovery function unique to Wi-Fi Direct. The service discovery function is used to exchange service information held by a partner communication apparatus by transmitting/receiving action frames defined in the IEEE802.11u standard. More specifically, the service discovery control unit 214 transmits a signal SD Query, and receives a signal SD Response as a response. Alternatively, the service discovery control unit 214 receives a signal SD Query from a partner apparatus, and transmits a signal SD Response as a response.

Reference numeral 215 denotes a P2P invitation function control unit, which controls an invitation function defined in the Wi-Fi Direct standard. The invitation function is defined in the Wi-Fi Direct specification and a description thereof will be omitted. The invitation function is a function used by a GO apparatus or CL apparatus to prompt a P2P device, whose role has not been decided, to connect as a P2P client.

Note that all the functional blocks have a mutual relationship in a software or hardware manner. The aforementioned functional blocks are merely examples. A plurality of functional blocks may form one functional block, or any one of the functional blocks may be divided into a plurality of functional blocks.

### (System Configuration)

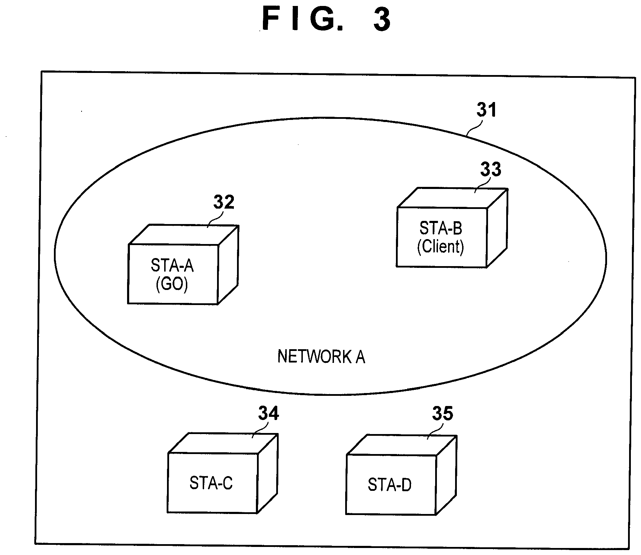

Fig. 3 is a view showing an example of the configuration of a wireless communication system. Fig. 3 shows a case in which a communication apparatus A 32 (STA-A) and a communication apparatus B 33 (STA-B) form network A. In the example shown in Fig. 3, in addition to the STA-A and STA-B, a communication apparatus C 34 (STA-C) and a communication apparatus D 35 (STA-D) are present. Each of the communication apparatuses has the arrangement shown in Figs. 1 and 2 described above. In the embodiment, the STA-A operates as a GO and the STA-B serves as a CL.

### (Connection Establishment Processing)

Processing executed to establish a connection in the wireless communication system will be described below. A case (case 1) in which the self communication apparatus is the STA-C, a case (case 2) in which the self communication apparatus is the STA-B, and a case (case 3) in which the self communication apparatus is the STA-A will be sequentially explained below.

### (Case 1)

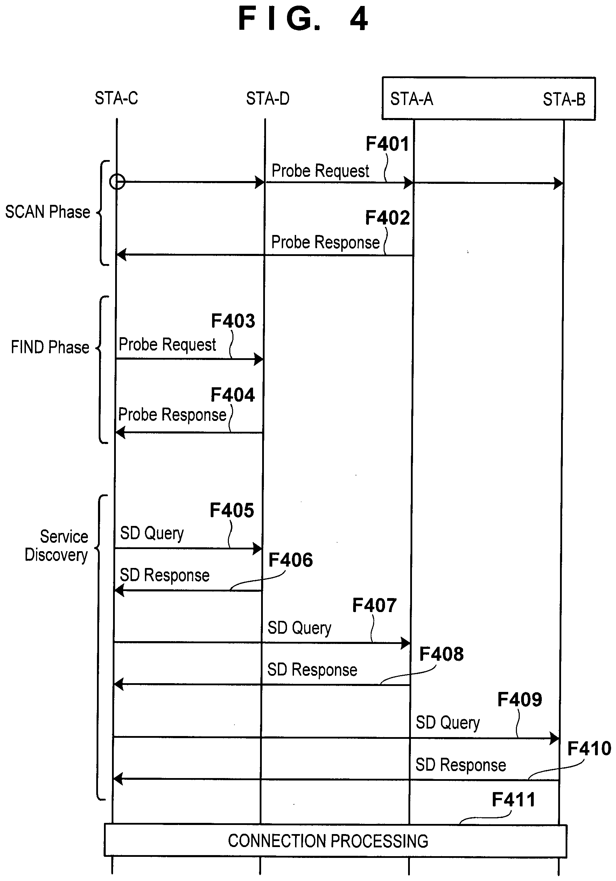

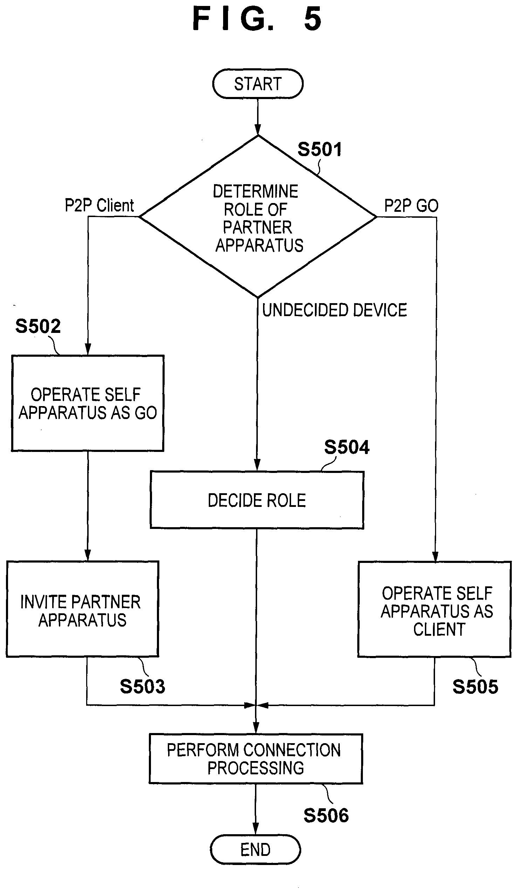

Case 1 will be described with reference to Figs. 4 and 5. Fig. 4 is a sequence chart showing processing executed by the overall wireless communication system. Fig. 5 is a flowchart illustrating connection processing executed by the self communication apparatus (STA-C).

Since the STA-C is an apparatus for newly executing Wi-Fi Direct, it performs the search processing defined in the Wi-Fi Direct standard. Discovery processing in Wi-Fi Direct will now be described. When the operation unit 108 activates Wi-Fi Direct, all channels are searched (SCAN). A phase in which this processing is performed is called SCAN Phase. In SCAN Phase, all APs such as Wi-Fi Direct apparatuses and wireless LAN access points which are not the Wi-Fi Direct apparatuses are searched. After that, Wi-Fi Direct compatible apparatus search processing called Find Phase is executed. In Find Phase, waiting processing (Listen) is performed at a channel designated in advance. After a given time elapses, search processing (Search) is performed. The channel used in the waiting processing and the search processing is limited to a specific one, thereby making it possible to search for a partner apparatus quicker than scanning all the channels. As for a detailed operation procedure, see the Wi-Fi Direct specification.

The STA-C executes SCAN Phase described above. The STA-C broadcasts a Probe Request packet (F401). The STA-A serving as a GO returns a Probe Response packet (F402). The Probe Response packet from the GO is attached with information of a CL (STA-B in Fig. 4) which is currently connected with the GO. The STA-C then executes Find Phase. The STA-C broadcasts a Probe Request packet (F403). The STA-D in the Listen state returns a Probe Response packet (F404). The procedure in F401 to F404 enables the STA-C to recognize the presence of the STA-A, STA-B, and STA-D.

The STA-C continuously executes service discovery processing to acquire information about a service executed by each communication apparatus.

The STA-C transmits a service query signal SD Query to the STA-D (F405). The STA-D transmits a service query response signal SD Response to the STA-C (F406). Similarly, the STA-C transmits a signal SD Query to the STA-A (F407), and receives a signal SD Response from the STA-A (F408). After that, the STA-C transmits a signal SD Query to the STA-B (F409), and receives a signal SD Response (F410) from the STA-B. Since the above procedure enables the STA-C to recognize a service held by a communicable communication apparatus, the STA-C identifies a connection partner by user selection or the like, and executes connection processing with the identified connection partner (F411). The behavior of the connection processing differs depending on the role of the connection partner, and will be described with reference to Fig. 5.

The STA-C confirms the role of a partner communication apparatus selected as a connection partner (step S501). If the partner communication apparatus serves as a P2P client, the self communication apparatus is forcibly operated as a GO to form a P2P group (step S502). After that, the invitation function defined in the Wi-Fi Direct specification is activated (step S503). This connects the partner apparatus to the self P2P group formed in step S502 (step S506).

On the other hand, assume that it is determined in step S501 that the partner communication apparatus serves as a P2P device but its role (GO or CL) is undecided. In this case, the STA-C executes role decision processing (GO Negotiation) with the partner apparatus (step S504), and decides the roles of the self apparatus and the partner apparatus to execute the connection processing (step S506).

If it is determined in step S501 that the partner communication apparatus serves as a P2P group owner (GO), the role of the self communication apparatus is decided as a P2P client (step S505), and the connection processing is executed with the partner apparatus (step S506).

Note that a case in which it is determined that the role of the communication apparatus is a P2P client includes a case in which the apparatus is connected to the P2P group owner at the determination stage and a case in which the apparatus holds information about a network connected before and becomes a P2P client again upon re-connection. According to the Wi-Fi Direct standard, this re-connection function is defined as a persistent group (permanent group). Similarly, even if the communication apparatus does not form a network at the determination stage and has a capability of operating as a persistent group owner, it may be determined as a P2P group owner. The same goes for the following description.

### (Case 2)

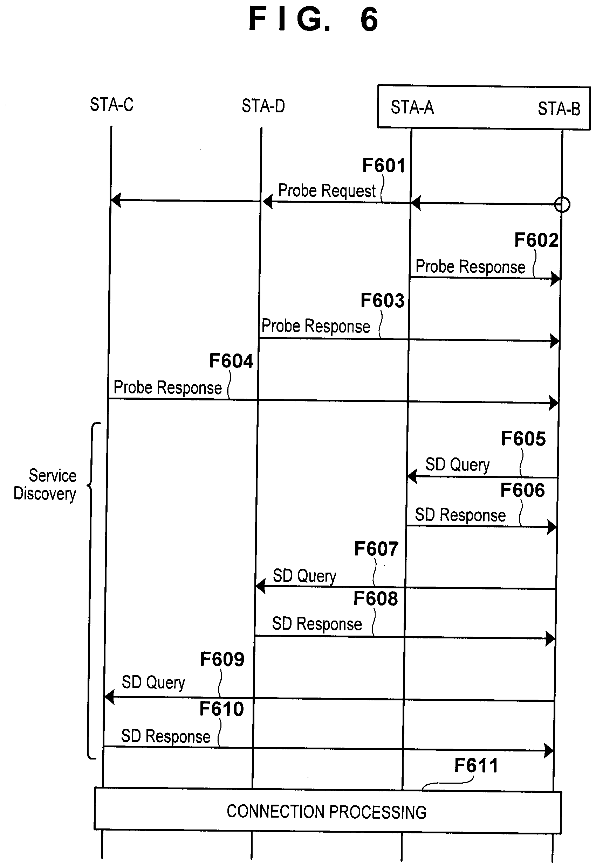

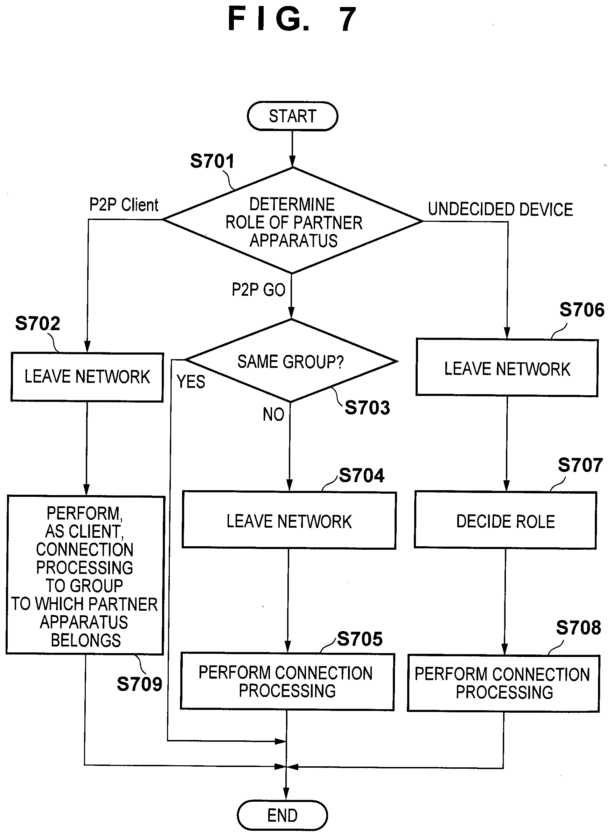

Case 2 will be described with reference to Figs. 6 and 7. Fig. 6 is a sequence chart showing processing executed by the overall wireless communication system. Fig. 7 is a flowchart illustrating connection processing executed by the self communication apparatus (STA-B). Note that as described above, the STA-B belongs to a P2P group in which the STA-A serves as a GO, and has a role as a P2P client (CL).

The STA-B broadcasts a signal Probe Request to search for peripheral apparatuses in a wireless LAN layer (F601). The STA-A serves as a GO, and its wireless LAN access point function is active. Therefore, the STA-A sends a signal Probe Response in response to the signal Probe Request in F601 (F602). If each of the STA-D and the STA-C is in the Listen state, it returns a signal Probe Response (F603 and F604). The procedure in F601 to F604 enables the STA-B to recognize the presence of the STA-A, STA-C, and STA-D.

The STA-B continuously executes service discovery processing to acquire information about a service executed by each communication apparatus.

The STA-B transmits a service query signal SD Query to the STA-A (F605). The STA-A transmits a service query response signal SD Response to the STA-B (F606). Similarly, the STA-B transmits a signal SD Query to the STA-D (F607), and receives a signal SD Response from the STA-D (F608). After that, the STA-B transmits a signal SD Query to the STA-C (F609), and receives a signal SD Response from the STA-C (F610). Since the above procedure enables the STA-B to recognize a service held by a communicable communication apparatus, the STA-B identifies a connection partner by user selection or the like, and executes connection processing with the identified connection partner (F611). The behavior of the connection processing differs depending on the role of the connection partner, and will be described with reference to Fig. 7.

The STA-B confirms the role of a partner communication apparatus selected as a connection partner (step S701). If the partner communication apparatus serves as a P2P client, the STA-B leaves the network to which it currently belongs (step S702), and executes again, as a P2P client, the connection processing to the network of a P2P group to which the partner device belongs (step S709). A case in which if the partner apparatus serves as a P2P client, the STA-B changes the network has been explained. The present invention, however, is not limited to this. The STA-B may use the invitation function defined in the Wi-Fi Direct specification to invite the partner device to join the P2P group to which the self communication apparatus belongs without leaving the network. In this case, the STA-B may skip the above-described processing, and simply output an error to terminate the process.

On the other hand, if it is determined in step S701 that the partner communication apparatus serves as a P2P group owner, the STA-B confirms whether the P2P group of the partner apparatus is the same as that to which the self communication apparatus currently belongs (step S703). If it is confirmed that the apparatuses belong to the same group, the STA-B terminates the process without executing any processing since it is already connected to the partner apparatus. That is, if the STA-A is to execute a service designated by a user operation, a connection with the STA-A has already been established, and it is thus only necessary to perform communication using the established connection without executing the connection processing for communication. On the other hand, if it is determined in step S703 that the partner communication apparatus serves as the GO of a group different from the P2P group to which the self communication apparatus belongs, the STA-B temporarily disconnects the self communication apparatus from the currently connected network (step S704). The STA-B continues to execute the connection processing to the P2P group formed by the desired partner communication apparatus (step S705).

Furthermore, if it is determined in step S701 that the partner communication apparatus serves as a P2P device but its role (GO or CL) is undecided, the STA-B disconnects the self communication apparatus from the currently connected network (step S706). After that, the STA-B executes role decision processing (GO Negotiation) (step S707), and decides the roles of the self apparatus and the partner apparatus to execute the connection processing (step S708). Note that in this case, the STA-B may use the invitation function defined in the Wi-Fi Direct specification to invite the partner device to join the P2P group to which the self communication apparatus belongs without leaving the network.

### (Case 3)

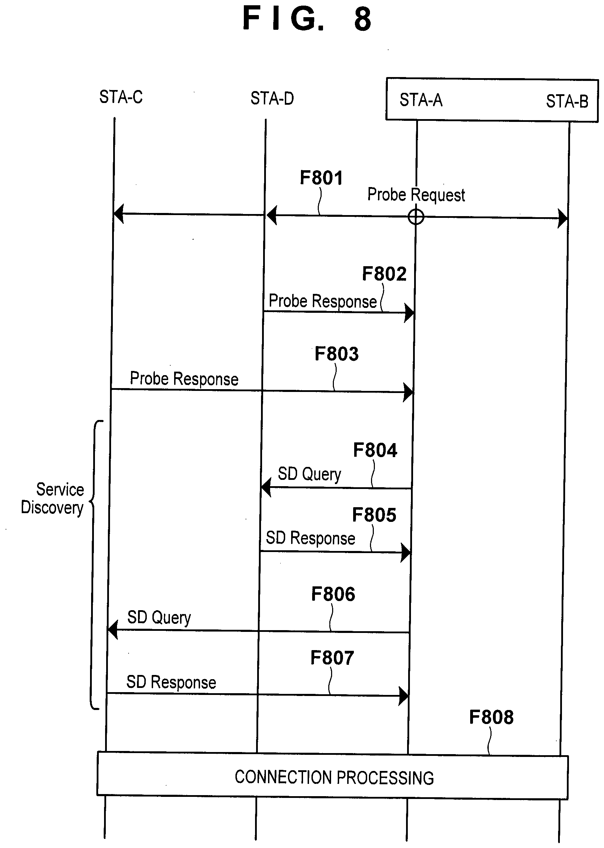

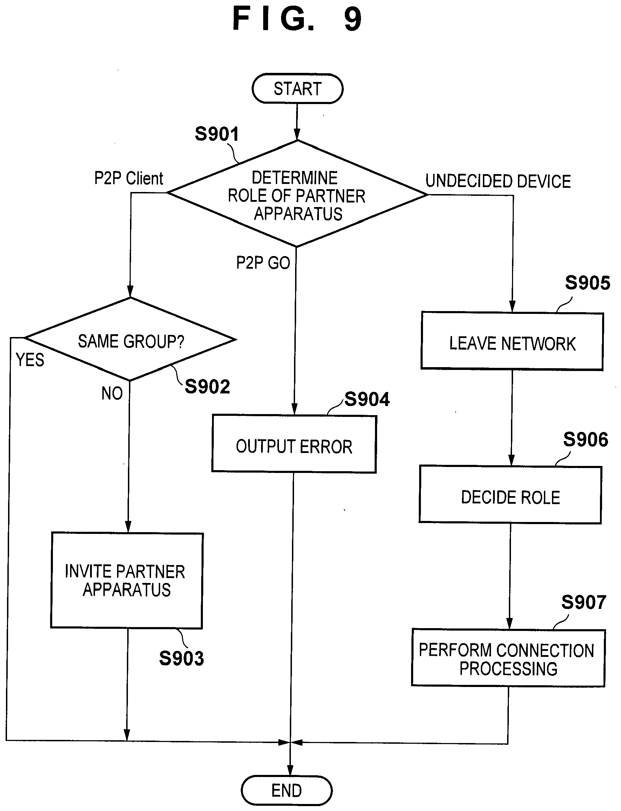

Lastly, Case 3 will be described with reference to Figs. 8 and 9. Fig. 8 is a sequence chart showing processing executed by the overall wireless communication system. Fig. 9 is a flowchart illustrating connection processing executed by the self communication apparatus (STA-A). Note that as described above, the STA-A serves as a P2P group owner (GO) and the self apparatus forms a P2P group. The STA-B belongs to the P2P group as a P2P client (CL).

The STA-A broadcasts a signal Probe Request to search for peripheral apparatuses in the wireless LAN layer (F801).

The STA-B serves as a CL, and its wireless LAN client function is active. Therefore, the STA-B does not respond to the signal Probe Request in F801. If each of the STA-D and the STA-C is in the Listen state, it returns a signal Probe Response (F802 and F803). The procedure in F801 to F803 enables the STA-A to recognize the presence of the STA-C and STA-D. Since a P2P group owner has to always recognize a P2P client in a connection state, the STA-A has already recognized the presence of the STA-B. Like other wireless communication apparatuses, therefore, the self communication apparatus can recognize the presence of the three remaining communication apparatuses of the network shown in Fig. 3.

The STA-A continuously executes service discovery processing to acquire information about a service executed by each communication apparatus.

Since the STA-A serves as a GO, it already has recognized information of the STA-B which serves as a CL belonging to the group of the STA-A. In this case, the STA-A does not send a service query signal to the STA-B. Note that to share the process with other cases, the STA-A may send a service query signal to the STA-B.

The STA-A transmits a service query signal SD Query to the STA-D (F804). The STA-D transmits a service query response signal SD Response to the STA-A (F805). Similarly, the STA-A transmits a signal SD Query to the STA-C (F806), and receives a signal SD Response from the STA-C (F807). Since the above procedure enables the STA-A to recognize a service held by a communicable communication apparatus, the STA-A identifies a connection partner by user selection or the like, and executes connection processing with the identified partner (F808). The behavior of the connection processing differs depending on the role of the connection partner, and will be described with reference to Fig. 9.

The STA-A confirms the role of a partner communication apparatus selected as a connection partner (step S901). If the partner communication apparatus serves as a P2P client, the STA-A determines whether the partner communication apparatus belongs to a P2P group formed by the self communication apparatus (step S902). If it is determined in step S902 that the partner communication apparatus exists in the self group, the STA-A terminates the processing without executing any processing, and receives an upper-layer service. That is, if the STA-A selects the STA-B as a connection partner according to service selection or the like by a user operation, a connection with the STA-B has already been established, and thus the STA-A does not execute the connection establishment processing any more. On the other hand, if it is determined in step S902 that the partner communication apparatus belongs to another P2P group, the STA-A uses the invitation function defined in Wi-Fi Direct specification to invite the partner communication apparatus to the P2P group to which the self communication apparatus belongs. The STA-A causes the partner communication apparatus to join the network connected with the self communication apparatus (step S903). Alternatively, without using the invitation function, the STA-A may terminate the network of the self communication apparatus and connect, as a P2P client, to the P2P group formed by the partner apparatus.

On the other hand, if it is determined in step S901 that the partner communication apparatus serves as a P2P group owner, the GOs do not exchange normal data packets, and thus the STA-A abnormally terminates the connection processing (step S904). Note that instead of abnormally terminating the processing, the STA-A may terminate the P2P group of the self communication apparatus and connect, as a P2P client, to the P2P group formed by the partner apparatus.

Assume that it is determined in step S901 that the partner communication apparatus serves as a P2P device but its role (GO or CL) is undecided. In this case, the STA-A terminates the network of the self communication apparatus (step S905). After that, the STA-A executes role decision processing (GO Negotiation) (step S906). In step S906, the STA-A decides the roles of the self communication apparatus and the partner communication apparatus, and executes the connection processing (step S907). Note that the STA-A may use the invitation function defined in the Wi-Fi Direct specification to invite the partner device to the P2P group to which the self communication apparatus belongs without leaving the network in step S905.

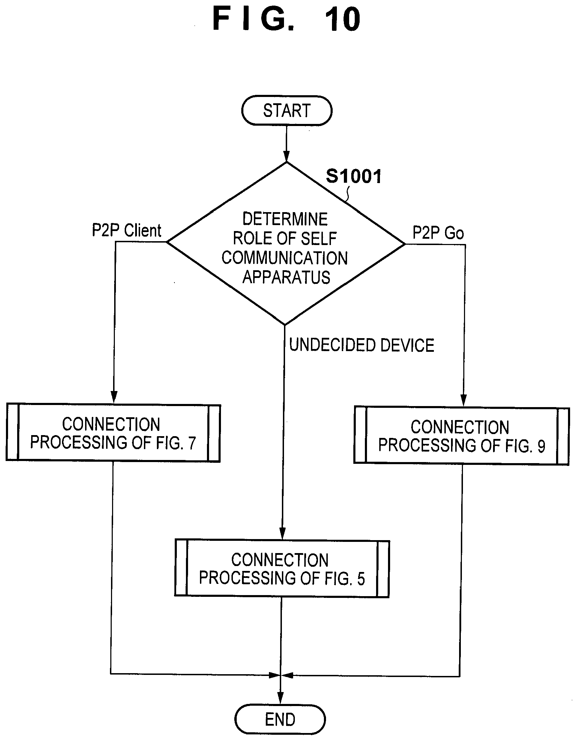

Note that the above-described connection processes can be represented by one flowchart. Fig. 10 is a flowchart illustrating the connection processing executed by the communication apparatus. As shown in Fig. 10, the processing shown in Fig. 5, 7, or 9 is executed depending on whether the role of the communication apparatus is undecided, a P2P client, or a P2P group owner.

As described above, it is possible to control connection in the wireless LAN layer using the result of a service search when receiving a desired service by determining the execution states of the base station functions and terminal functions of the self communication apparatus and partner apparatus, and executing connection processing. Note that the above-described processing may be executed when an application or the like that requires communication is activated by a user operation. In this case, when the user only selects and activates an application or the like, the communication apparatus searches for a partner apparatus which can execute a service requested according to the application or the like, and automatically connects to the found apparatus, thereby improving the user convenience. When, for example, the user performs an operation of requesting communication (for example, the user presses a button), the communication apparatus may search the services of one or more other communication apparatuses existing within a communicable range, and notify the user of usable services based on the search result using the display unit 105 or the like. The user may then select a partner apparatus for communication by selecting, among the usable services, a service (for example, printing, display, or data transfer) the user wants to use, thereby executing the connection processing.

As described above, according to this embodiment, it is possible to automatically solve the connection processing in the wireless LAN layer by only selecting a communication apparatus which provides a service the user wants to receive, thereby improving the user convenience.

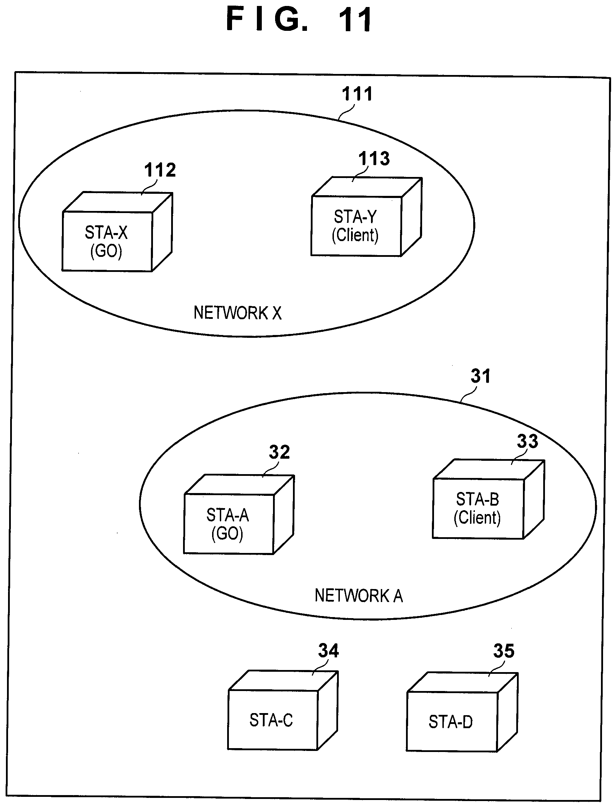

A case in which there are one already established P2P group and a P2P device which does not belong to any network has been described above. This method is applicable to a case in which there are two or more already established P2P groups. That is, a method similar to the above-described one can be used even in a communication system shown in Fig. 11 in which network X is formed by a communication apparatus X 112 (STA-X) and a communication apparatus Y 113 (STAY) in addition to network A shown in Fig. 3.

### <<Second Embodiment>>

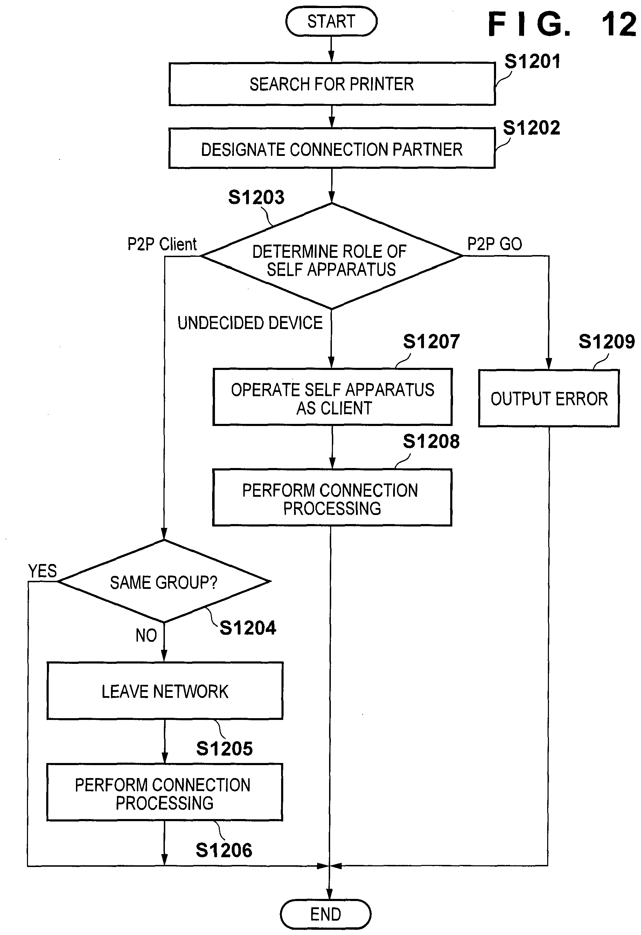

In the first embodiment, a typical example has been explained without describing a service provided by each communication apparatus. In this embodiment, a case in which a communication apparatus as a communication partner is a printer will be described. As a use case when a self communication apparatus searches for a printer as a communication partner, the self communication apparatus sends its image information and the like to the printer for printing. The printer is generally connected to an external power supply and thus has no problem in terms of the power consumption even if it executes the base station function. It is assumed that a plurality of users sequentially request output of images/documents, and thus the printer keeps the base station function activated. In this embodiment, therefore, the communication apparatus executes connection processing by assuming that the partner apparatus always serves as a P2P group owner. A detailed description will be provided below with reference to Fig. 12.

Fig. 12 is a flowchart illustrating the operation of connection processing of searching for a printer to connect. To execute print processing, a communication apparatus searches for a printer existing within a communicable range (step S1201). If a plurality of printers are found as a result of the search operation, the communication apparatus designates a connection partner (partner printer) (step S1202). When selecting a connection partner, the user may select a partner or the apparatus may automatically select a partner based on the function (the resolution, the number of printable pages, the presence/absence of the double-sided printing function, and the like) and device name of the partner printer. Printers to be found are limited to those in which the base station function is activated.

After selecting the partner printer, the communication apparatus determines the function of the self communication apparatus as a P2P device (step S1203). If it is determined in step S1203 that the self communication apparatus serves as a P2P client, the communication apparatus determines whether the partner printer exists in the same network (step S1204). If the partner printer exists in the same network, the communication apparatus executes printing processing without executing the processing any more since a connection with the partner printer has already been established. On the other hand, if it is determined in step S1204 that the partner printer exists in a different network, the communication apparatus leaves the currently established network (step S1205), and executes connection processing to the network in which the partner printer exists (step S1206).

On the other hand, if it is determined in step S1203 that the role of the self communication apparatus is undecided, the communication apparatus operates as a P2P client (step S1207), and executes, as a P2P client, connection processing to the partner printer (step S1208). Or, if it is determined in step S1203 that the self communication apparatus serves as a P2P group owner or base station, the communication apparatus abnormally terminates the process without executing the connection processing any more (step S1209).

As described above, according to this embodiment, when the user requests a printing service, it is possible to automatically solve the connection processing in the wireless LAN layer by selecting a printer as a communication partner, and considering the printer as a P2P group owner to execute processing. As a result, the user convenience improves.

### <<Third Embodiment>>

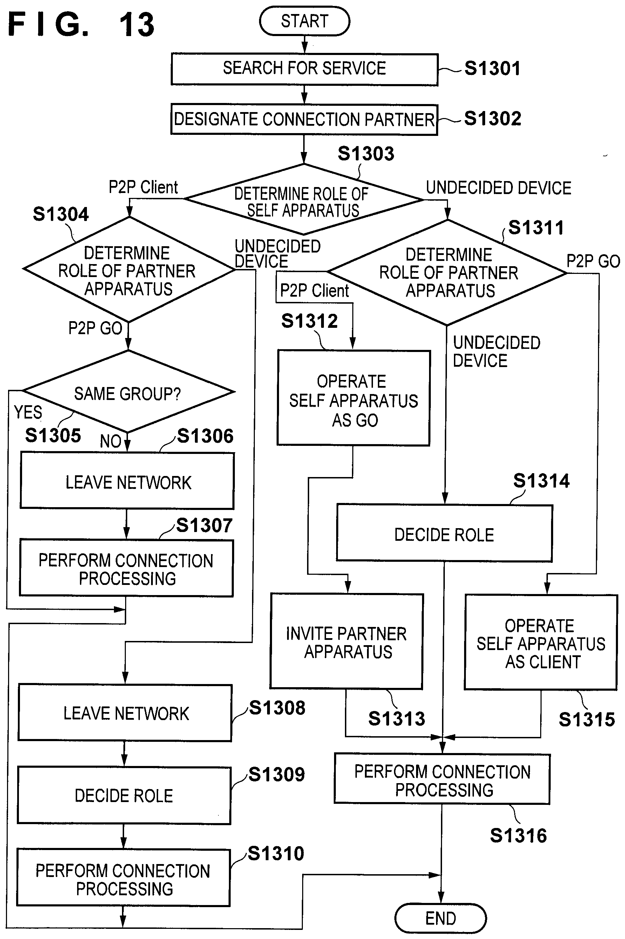

In the first embodiment, a typical example has been explained without describing a service provided by each communication apparatus. In this embodiment, a case in which a self communication apparatus is a scanner will be described. As a use case when a self communication apparatus is a scanner, the self communication apparatus sends its images such as a scan result to an output device such as a printer or display for printing or displaying. Note that although a scanner will be exemplified in this embodiment, another device such as a digital camera or digital video camera having a function of sending data to an output device can be used, similarly to the scanner. In such use case, it is advantageous if the communication apparatus activates the wireless LAN client function. For example, an output device like a printer had better execute the base station function, as described in the second embodiment, and it is more advantageous for an apparatus such as a camera or scanner which does not receive information from another apparatus to execute the terminal function and connect to an output device in terms of resource sharing. A detailed description will be provided below with reference to Fig. 13.

Fig. 13 is a flowchart illustrating the operation of connection processing of searching for a data outputting apparatus to connect when the self communication apparatus serves as a data providing apparatus.

The communication apparatus searches for a partner apparatus to execute output processing (step S1301). If, as a result of the search operation, a plurality of partner apparatuses are found, the communication apparatus designates a connection partner (step S1302). When selecting a connection partner, the user may select a partner or the apparatus may automatically select a partner based on the function (printer, display, or PC) and device name of the partner device.

The communication apparatus confirms whether its role is a P2P client or undecided (step S1303). If, like a scanner, the communication apparatus searches for an output apparatus such as a printer, it does not consider that it operates as a group owner or base station. Note that if the self communication apparatus functions as a group owner, it may determine that its role is undecided.

If the communication apparatus serves as a P2P client, it confirms the role of the partner communication apparatus (step S1304). If the partner communication apparatus serves as a P2P group owner, the communication apparatus confirms whether the partner communication apparatus exists in a network to which the self apparatus belongs (step S1305). If the partner communication apparatus exists in the same network, the process is terminated to transit to service processing. On the other hand, if it is determined in step S1305 that the partner communication apparatus exists in a different network, the communication apparatus leaves the currently connected network (step S1306), and newly connects to a P2P group formed by the partner communication apparatus (step S1307).

If it is determined in step S1304 that the partner device does not serve as a P2P group owner, the communication apparatus leaves the currently connected network (step S1308), and executes role decision processing with the partner communication apparatus (step S1309). The communication apparatus establishes communication with the partner communication apparatus according to the decided role (step S1310).

On the other hand, if it is determined in step S1303 that the role of the self apparatus is undecided, the communication apparatus confirms the role of the partner communication apparatus (step S1311). If the partner communication apparatus serves as a P2P client, the self communication apparatus sets its role to a P2P group owner (step S1312), uses the invitation function to call the partner apparatus (step S1313), and executes connection processing with the partner apparatus (step S1316). On the other hand, if it is determined in step S1311 that the role of the partner apparatus is also undecided, the communication apparatus executes role decision processing (GO Negotiation) (step S1314), and executes connection processing with the partner apparatus according to the decided role (step S1316). If it is determined in step S1311 that the partner apparatus serves as a P2P group owner, the communication apparatus sets itself as a P2P client (step S1315), and executes connection processing with the partner apparatus (step S1316).

As described above, according to this embodiment, it is possible to automatically solve the connection processing in the wireless LAN layer, thereby improving the user convenience.

### <<Other Embodiments>>

Each of the aforementioned embodiments merely indicates one example to implement the present invention, and various modifications can be made without departing from the scope of the present invention. The respective embodiments can be combined. Furthermore, the user may arbitrarily select whether each communication apparatus operates according to the first embodiment, the second embodiment, or the third embodiment.

The communication apparatus according to each of the aforementioned embodiments is not limited to a digital camera or printer. The communication apparatus may be a PC, a tablet terminal, or a mobile terminal such as a mobile phone or smartphone. Alternatively, the communication apparatus may be an image processing apparatus such as a copying machine, scanner, FAX, or multifunction peripheral, or a digital home electric appliance such as a TV set or recorder.

According to the present invention, it is possible to decrease the number of user operations associated with wireless connection.

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation.

## Claims

1. A communication apparatus (STA-A, STA-B, STA-C) for communicating using Wi-Fi direct which has a base station function and a terminal function and performs communication using at least one of the base station function and the terminal function, comprising:
identification means for identifying a partner apparatus for communication among one or more other communication apparatuses based on a service to be executed by the communication apparatus and services to be executed by the other communication apparatuses; and
decision means for deciding whether the communication apparatus uses the base station function or the terminal function when connecting to the partner apparatus, based on execution states of base station functions and terminal functions of the communication apparatus and the partner apparatus
wherein:
in a case that the partner apparatus executes the terminal function and the communication apparatus does not execute the terminal function, the decision means is adapted to decide (S903) to connect to the partner apparatus using the base station function by causing the partner apparatus to join the network of the communication apparatus,
in a case that the partner apparatus executes the base station function (S701, P2P GO) and the communication apparatus does not execute the base station function, the decision means is adapted to decide (S705) to connect to the partner apparatus using the terminal function,
in a case that the partner apparatus executes neither the base station function nor the terminal function (S501, S701, S901, UNDECIDED), the decision means is adapted to perform decision, with the partner apparatus based on a predetermined protocol, in which one of the communication apparatus and the partner apparatus is decided to execute the base station function and another one of the communication apparatus and the partner apparatus is decided to execute the terminal function (S504, S707, S906), and
wherein in a case where both the communication apparatus and the partner apparatus execute the base station function, the communication apparatus is adapted to abnormally terminate the connection processing by outputting an error.

2. A communication apparatus (STA-A, STA-B, STA-C) according to claim 1, wherein
in a case that the partner apparatus executes the base station function, and the communication apparatus executes the terminal function and is not connected to the partner apparatus, the decision means is adapted to decide to connect (S705) to the partner apparatus using the terminal function after leaving (S704) an established network.

3. A communication apparatus (STA-A, STA-B, STA-C) according to claim 1 or claim 2, wherein
in a case that the partner apparatus executes the base station function and the communication apparatus executes the base station function, the decision means is adapted to output an error (S904) .

4. A communication apparatus (STA-A, STA-B, STA-C) according to any one of claims 1 to 3, wherein
in a case that the partner apparatus executes the terminal function and the communication apparatus executes the terminal function, the decision means is adapted to decide to leave an established network (S702) and then connect (S709), by using the terminal function, to another communication apparatus to which the partner apparatus is connected and which executes a base station function.

5. A control method for a communication apparatus (STA-A, STA-B, STA-C) to communicate using Wi-Fi direct which has a base station function and a terminal function and performs communication using at least one of the base station function and the terminal function, comprising:
identifying, by identification means, a partner apparatus for communication among one or more other communication apparatuses based on a service to be executed by the communication apparatus and services to be executed by the other communication apparatuses; and
deciding, by decision means, whether the communication apparatus uses the base station function or the terminal function when connecting to the partner apparatus, based on execution states of base station functions and terminal functions of the communication apparatus and the partner apparatus
wherein:
in a case that the partner apparatus executes the terminal function and the communication apparatus does not execute the terminal function, deciding to connect to the partner apparatus using the base station function by causing (S903) the partner communication apparatus to join the network of the communication apparatus,
in a case that the partner apparatus executes the base station function (S701, P2P GO)) and the communication apparatus does not execute the base station function, deciding to connect to the partner apparatus using the terminal function (S705),
in a case that the partner apparatus executes neither the base station function nor the terminal function (S501, S701, S901, UNDECIDED), performing decision, with the partner apparatus based on a predetermined protocol, in which one of the communication apparatus and the partner apparatus is decided to execute the base station function and another one of the communication apparatus and the partner apparatus is decide to execute the terminal function (S504, S707, S906), and
wherein in a case where both the communication apparatus and the partner apparatus execute the base station function, the communication apparatus abnormally terminates the connection processing by outputting an error.

6. A method according to claim 5, wherein
in a case that the partner apparatus executes the base station function, and the communication apparatus executes the terminal function and is not connected to the partner apparatus, it is decided in the deciding to connect to the partner apparatus using the terminal function after leaving an established network.

7. A method according to claim 5 or claim 6, wherein
in a case that the partner apparatus executes the base station function and the communication apparatus executes the base station function, an error is output in the deciding.

8. A method according any one of claims 5 to 7,
wherein
in a case that the partner apparatus executes the terminal function and the communication apparatus executes the terminal function, it is decided in the deciding to leave an established network and then connect, by using the terminal function, to another communication apparatus to which the partner apparatus is connected and which executes a base station function.

9. A computer-readable storage medium storing a computer program for causing a computer, included in a communication apparatus which has a base station function and a terminal function and performs communication using at least one of the base station function and the terminal function, to perform a method according to claim 5.

## Patentansprüche

1. Kommunikationsvorrichtung (STA-A, STA-B, STA-C) zum Kommunizieren unter Verwendung von Wi-Fi-Direct, welche eine Basisstationsfunktion und eine Terminalfunktion aufweist und Kommunikation unter Verwendung der Basisstationsfunktion und/oder der Terminalfunktion durchführt, umfassend:
eine Identifikationseinrichtung zum Identifizieren einer Partnervorrichtung zum Kommunizieren unter einer oder mehreren anderen Kommunikationsvorrichtungen basierend auf einem durch die Kommunikationsvorrichtung auszuführenden Dienst und durch die anderen Kommunikationsvorrichtung auszuführenden Diensten; und
eine Entscheidungseinrichtung zum Entscheiden, ob die Kommunikationsvorrichtung beim Verbinden mit der Partnervorrichtung die Basisstationsfunktion oder die Terminalfunktion verwendet, basierend auf Ausführungszuständen von Basisstationsfunktionen und Terminalfunktionen der Kommunikationsvorrichtung und der Partnervorrichtung, wobei:
falls die Partnervorrichtung die Terminalfunktion ausführt und die Kommunikationsvorrichtung die Terminalfunktion nicht ausführt, die Entscheidungseinrichtung ausgelegt ist, zu entscheiden (S903), dass unter Verwendung der Basisstationsfunktion eine Verbindung zur Partnervorrichtung eingerichtet wird, indem die Partnervorrichtung veranlasst wird, dem Netz der Kommunikationsvorrichtung beizutreten,
falls die Partnervorrichtung die Basisstationsfunktion ausführt (S701, P2P GO) und die Kommunikationsvorrichtung die Basisstationsfunktion nicht ausführt, die Entscheidungseinrichtung ausgelegt ist, zu entscheiden (S705), dass die Verbindung zur Partnervorrichtung unter Verwendung der Terminalfunktion eingerichtet wird,
falls die Partnervorrichtung weder die Basisstationsfunktion noch die Terminalfunktion ausführt (S501, S701, S901, UNDECIDED), die Entscheidungseinrichtung ausgelegt ist, eine Entscheidung mit der Partnervorrichtung basierend auf einem vorbestimmten Protokoll durchzuführen, wobei entweder entschieden wird, dass die Kommunikationsvorrichtung die Basisstationsfunktion und die Partnervorrichtung die Terminalfunktion ausführt, oder entschieden wird, dass die Partnervorrichtung die Basisstationsfunktion und die Kommunikationsvorrichtung die Terminalfunktion ausführt (S504, S707, S906), und
wobei, falls sowohl die Kommunikationsvorrichtung als auch die Partnervorrichtung die Basisstationsfunktion ausführen, die Kommunikationsvorrichtung ausgelegt ist, die Verbindungsverarbeitung durch Ausgeben eines Fehlers abnormal zu beenden.

2. Kommunikationsvorrichtung (STA-A, STA-B, STA-C) nach Anspruch 1, wobei
die Entscheidungseinrichtung ausgelegt ist, zu entscheiden, dass unter Verwendung der Terminalfunktion und nach Verlassen (S704) eines eingerichteten Netzes eine Verbindung zur Partnervorrichtung eingerichtet wird (S705), falls die Partnervorrichtung die Basisstationsfunktion ausführt und die Kommunikationsvorrichtung die Terminalfunktion ausführt und nicht mit der Partnervorrichtung verbunden ist.

3. Kommunikationsvorrichtung (STA-A, STA-B, STA-C) nach Anspruch 1 oder Anspruch 2, wobei
die Entscheidungseinrichtung ausgelegt ist, einen Fehler auszugeben (S904), falls die Partnervorrichtung die Basisstationsfunktion ausführt und die Kommunikationsvorrichtung die Basisstationsfunktion ausführt.

4. Kommunikationsvorrichtung (STA-A, STA-B, STA-C) nach einem der Ansprüche 1 bis 3, wobei
falls die Partnervorrichtung die Terminalfunktion ausführt und die Kommunikationsvorrichtung die Terminalfunktion ausführt, die Entscheidungseinrichtung ausgelegt ist, zu entscheiden, dass ein eingerichtetes Netz verlassen wird (S702) und dann unter Verwendung der Terminalfunktion eine Verbindung mit einer anderen Kommunikationsvorrichtung eingerichtet wird (S709), mit welcher die Partnervorrichtung verbunden ist und welche eine Basisstationsfunktion ausführt.

5. Steuerverfahren für eine Kommunikationsvorrichtung (STA-A, STA-B, STA-C) zum Kommunizieren unter Verwendung von Wi-Fi-Direct, welche eine Basisstationsfunktion und eine Terminalfunktion aufweist und Kommunikation unter Verwendung mindestens der Basisstationsfunktion und/oder der Terminalfunktion durchführt, umfassend:
Identifizieren, durch eine Identifikationseinrichtung, einer Partnervorrichtung zum Kommunizieren mit einer oder mehreren anderen Kommunikationsvorrichtungen basierend auf einem durch die Kommunikationsvorrichtung auszuführenden Dienst und durch die anderen Kommunikationsvorrichtung auszuführenden Diensten; und
Entscheiden, durch eine Entscheidungseinrichtung, ob die Kommunikationsvorrichtung beim Verbinden mit der Partnervorrichtung die Basisstationsfunktion oder die Terminalfunktion verwendet, basierend auf Ausführungszuständen von Basisstationsfunktionen und Terminalfunktionen der Kommunikationsvorrichtung und der Partnervorrichtung, wobei:
falls die Partnervorrichtung die Terminalfunktion ausführt und die Kommunikationsvorrichtung die Terminalfunktion nicht ausführt, entschieden wird, dass unter Verwendung der Basisstationsfunktion eine Verbindung zur Partnervorrichtung eingerichtet wird, indem die Partnervorrichtung veranlasst wird (S903), dem Netz der Kommunikationsvorrichtung beizutreten,
falls die Partnervorrichtung die Basisstationsfunktion ausführt (S701, P2P GO) und die Kommunikationsvorrichtung die Basisstationsfunktion nicht ausführt, entschieden wird, dass die Verbindung zur Partnervorrichtung unter Verwendung der Terminalfunktion eingerichtet wird (S705),
falls die Partnervorrichtung weder die Basisstationsfunktion noch die Terminalfunktion ausführt (S501, S701, S901, UNDECIDED), eine Entscheidung mit der Partnervorrichtung basierend auf einem vorbestimmten Protokoll durchgeführt wird, wobei entweder entschieden wird, dass die Kommunikationsvorrichtung die Basisstationsfunktion und die Partnervorrichtung die Terminalfunktion ausführt, oder entschieden wird, dass die Partnervorrichtung die Basisstationsfunktion und die Kommunikationsvorrichtung die Terminalfunktion ausführt (S504, S707, S906), und
wobei die Kommunikationsvorrichtung die Verbindungsverarbeitung durch Ausgeben eines Fehlers abnormal beendet, falls sowohl die Kommunikationsvorrichtung als auch die Partnervorrichtung die Basisstationsfunktion ausführen.

6. Verfahren nach Anspruch 5, wobei
falls die Partnervorrichtung die Basisstationsfunktion ausführt und die Kommunikationsvorrichtung die Terminalfunktion ausführt und nicht mit der Partnervorrichtung verbunden ist, beim Entscheiden entschieden wird, dass unter Verwendung der Terminalfunktion und nach Verlassen eines eingerichteten Netzes eine Verbindung zur Partnervorrichtung eingerichtet wird.

7. Verfahren nach Anspruch 5 oder Anspruch 6, wobei beim Entscheiden ein Fehler ausgegeben wird, falls die Partnervorrichtung die Basisstationsfunktion ausführt und die Kommunikationsvorrichtung die Basisstationsfunktion ausführt.

8. Verfahren nach einem der Ansprüche 5 bis 7, wobei
falls die Partnervorrichtung die Terminalfunktion ausführt und die Kommunikationsvorrichtung die Terminalfunktion ausführt, beim Entscheiden entschieden wird, ein eingerichtetes Netz zu verlassen und dann unter Verwendung der Terminalfunktion eine Verbindung zu einer anderen Kommunikationsvorrichtung einzurichten, mit welcher die Partnervorrichtung verbunden ist und welche eine Basisstationsfunktion ausführt.

9. Computerlesbares Speichermedium, das ein Computerprogramm zum Veranlassen eines Computers, ein Verfahren nach Anspruch 5 durchzuführen, speichert, wobei der Computer in einer Kommunikationsvorrichtung enthalten ist, welche eine Basisstationsfunktion und eine Terminalfunktion aufweist und Kommunikation unter Verwendung der Basisstationsfunktion und/oder der Terminalfunktion durchführt.

## Revendications

1. Appareil de communication (STA-A, STA-B, STA-C) permettant une communication au moyen du Wi-Fi direct, qui possède une fonction station de base et une fonction terminal et qui met en œuvre une communication en faisant intervenir au moins l'une de la fonction station de base et de la fonction terminal, comprenant :
un moyen d'identification destiné à identifier un appareil partenaire à des fins de communication parmi un ou plusieurs autres appareils de communication sur la base d'un service à exécuter par l'appareil de communication et de services à exécuter par les autres appareils de communication ; et
un moyen de décision destiné à décider si l'appareil de communication fait intervenir la fonction station de base ou la fonction terminal lors de l'établissement de la connexion avec l'appareil partenaire, sur la base d'états d'exécution de fonctions station de base et de fonctions terminal de l'appareil de communication et de l'appareil partenaire
dans lequel
dans un cas dans lequel l'appareil partenaire exécute la fonction terminal et l'appareil de communication n'exécute pas la fonction terminal, le moyen de décision est apte à décider (S903) d'établir une connexion avec l'appareil partenaire en faisant intervenir la fonction station de base en amenant l'appareil partenaire à rejoindre le réseau de l'appareil de communication,
dans un cas dans lequel l'appareil partenaire exécute la fonction station de base (S701, P2P GO) et l'appareil de communication n'exécute pas la fonction station de base, le moyen de décision est apte à décider (S705) d'établir une connexion avec l'appareil partenaire en faisant intervenir la fonction terminal,
dans un cas dans lequel l'appareil partenaire n'exécute ni la fonction station de base ni la fonction terminal (S501, S701, S901, NON DÉCIDÉ), le moyen de décision est apte à prendre une décision, l'appareil partenaire étant basé sur un protocole prédéterminé, selon laquelle l'un de l'appareil de communication et de l'appareil partenaire fait l'objet d'une décision d'exécution de la fonction station de base et un autre de l'appareil de communication et de l'appareil partenaire fait l'objet d'une décision d'exécution de la fonction terminal (S504, S707, S906), et
dans lequel, dans un cas dans lequel l'appareil de communication et l'appareil partenaire exécutent tous les deux la fonction station de base, l'appareil de communication est apte à mettre anormalement fin au traitement de connexion par une délivrance d'une erreur.

2. Appareil de communication (STA-A, STA-B, STA-C) selon la revendication 1, dans lequel
dans un cas dans lequel l'appareil partenaire exécute la fonction station de base, et l'appareil de communication exécute la fonction terminal et n'est pas connecté à l'appareil partenaire, le moyen de décision est apte à décider d'établir une connexion (S705) avec l'appareil partenaire en faisant intervenir la fonction terminal après avoir quitté (S704) un réseau établi.

3. Appareil de communication (STA-A, STA-B, STA-C) selon la revendication 1 ou la revendication 2, dans lequel
dans un cas dans lequel l'appareil partenaire exécute la fonction station de base et l'appareil de communication exécute la fonction station de base, le moyen de décision est apte à délivrer une erreur (S904).

4. Appareil de communication (STA-A, STA-B, STA-C) selon l'une quelconque des revendications 1 à 3, dans lequel
dans un cas dans lequel l'appareil partenaire exécute la fonction terminal et l'appareil de communication exécute la fonction terminal, le moyen de décision est apte à décider de quitter un réseau établi (S702) et d'établir ensuite une connexion (S709), en faisant intervenir la fonction terminal, avec un autre appareil de communication auquel est connecté l'appareil partenaire et qui exécute une fonction station de base.

5. Procédé de commande d'un appareil de communication (STA-A, STA-B, STA-C) pour qu'il communique à l'aide du Wi-Fi direct, qui possède une fonction station de base et une fonction terminal et qui met en œuvre une communication en faisant intervenir au moins l'une de la fonction station de base et de la fonction terminal, comprenant les étapes consistant à :
identifier, par un moyen d'identification, un appareil partenaire à des fins de communication parmi un ou plusieurs autres appareils de communication sur la base d'un service à exécuter par l'appareil de communication et de services à exécuter par les autres appareils de communication ; et
décider, par un moyen de décision, si l'appareil de communication fait intervenir la fonction station de base ou la fonction terminal lors de l'établissement de la connexion avec l'appareil partenaire, sur la base d'états d'exécution de fonctions station de base et de fonctions terminal de l'appareil de communication et de l'appareil partenaire
dans lequel :
dans un cas dans lequel l'appareil partenaire exécute la fonction terminal et l'appareil de communication n'exécute pas la fonction terminal, décider d'établir une connexion avec l'appareil partenaire en faisant intervenir la fonction station de base en amenant (S903) l'appareil de communication partenaire à rejoindre le réseau de l'appareil de communication,
dans un cas dans lequel l'appareil partenaire exécute la fonction station de base (S701, P2P GO) et l'appareil de communication n'exécute pas la fonction station de base, décider d'établir une connexion avec l'appareil partenaire en faisant intervenir la fonction terminal (S705),
dans un cas dans lequel l'appareil partenaire n'exécute ni la fonction station de base ni la fonction terminal (S501, S701, S901, NON DÉCIDÉ), prendre une décision, l'appareil partenaire étant basé sur un protocole prédéterminé, selon laquelle l'un de l'appareil de communication et de l'appareil partenaire fait l'objet d'une décision d'exécution de la fonction station de base et un autre de l'appareil de communication et de l'appareil partenaire fait l'objet d'une décision d'exécution de la fonction terminal (S504, S707, S906), et
dans lequel, dans un cas dans lequel l'appareil de communication et l'appareil partenaire exécutent tous les deux la fonction station de base, l'appareil de communication met anormalement fin au traitement de connexion par une délivrance d'une erreur.

6. Procédé selon la revendication 5, dans lequel
dans un cas dans lequel l'appareil partenaire exécute la fonction station de base, et l'appareil de communication exécute la fonction terminal et n'est pas connecté à l'appareil partenaire, il est décidé, à l'étape de décision, d'établir une connexion avec l'appareil partenaire en faisant intervenir la fonction terminal après avoir quitté un réseau établi.

7. Procédé selon la revendication 5 ou la revendication 6, dans lequel
dans un cas dans lequel l'appareil partenaire exécute la fonction station de base et l'appareil de communication exécute la fonction station de base, une erreur est délivrée à l'étape de décision.

8. Procédé selon l'une quelconque des revendications 5 à 7, dans lequel
dans un cas dans lequel l'appareil partenaire exécute la fonction terminal et l'appareil de communication exécute la fonction terminal, il est décidé, à l'étape de décision, de quitter un réseau établi et d'établir ensuite une connexion, en faisant intervenir la fonction terminal, avec un autre appareil de communication auquel est connecté l'appareil partenaire et qui exécute une fonction station de base.

9. Support d'informations lisible par ordinateur contenant en mémoire un programme informatique destiné à amener un ordinateur, compris dans un appareil de communication qui possède une fonction station de base et une fonction terminal et qui met en œuvre une communication en faisant intervenir au moins l'une de la fonction station de base et de la fonction terminal, à mettre en œuvre un procédé selon la revendication 5.
